Europäisches Patentamt

European Patent Office

Office européen des brevets

(11) Publication number: **0 441 336 A1**

# EUROPEAN PATENT APPLICATION

(21) Application number: **91101581.6**

(22) Date of filing: **06.02.91**

(51) Int. Cl.⁵: **F16K 3/08**

(30) Priority: **09.02.90 IT 2059790 U**

(43) Date of publication of application:
**14.08.91 Bulletin 91/33**

(84) Designated Contracting States:
**DE ES FR GB**

(71) Applicant: **ZANETTA CAV.GIOVANNI &C. S.N.C.**
**Via F.lli Rosselli 3**
**I-28014 Maggiora (Province of Novara)(IT)**

(72) Inventor: **Zanetta, Giovanni**
**Via F.lli Rosselli 7**
**I-28014 Maggiora (Province of Novara)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Ceramic disk valve for taps and fittings.**

(57) The ceramic disk valve (1) has a body (2) in which is defined an axial passage (3) for the accommodation of a cutoff assembly including ceramic disks (4,5). The passage (3) defines an inlet (12) at which is arranged a gasket (19). A resting element (23) is interposed between the annular gasket (19) and one of the disks (6), such resting element (23) being slidable along the passage (3). Means (24) are provided for limiting the axial sliding of the resting element (23) along the passage (3).

Fig.1

Rank Xerox (UK) Business Services

## CERAMIC DISK VALVE FOR TAPS AND FITTINGS.

The present invention relates to a ceramic disk valve for taps and fittings.

Valves for taps, and more particularly ceramic disk valves, are known; such ceramic disk valves comprise a substantially cylindrical body in which an axial passage is defined which accommodates a cutoff assembly. The cutoff assembly is composed of an actuation rod which can rotate about its own axis and of cutoff elements constituted by a pair of ceramic disks having mutually contacting faces. The axes of the disks (i.e. perpendicular to the disk faces) are arranged coaxially to the axis of the axial passage and to the axis of the actuation rod.

The ceramic disks are arranged in the axial passage between a longitudinal end of the valve cylindrical body, at which the axial passage defines an inlet port for the flow of water to be controlled by means of the valve, and at least one outlet port defined in an intermediate region of the skirt of the valve.

The ceramic disks are axially traversed by intermediate ports, and one of the two disks, generally the innermost one, is rigidly associated with the actuation rod in its rotation about its own axis, whereas the other disk is locked by a coupling with the cylindrical body of the valve. The rotation of the rod about its own axis causes the relative rotation of one disk with respect to the other, so as to mutually align the intermediate ports, thus providing a connection between the inlet port and the outlet port, or so as to mutually offset the intermediate ports in order to interrupt said connection.

An annular gasket is arranged between the disk which is nearest to the inlet port, which generally is the non-rotating disk, and the related longitudinal end of the valve cylindrical body; said gasket rests on one face of said disk and protrudes axially from the valve cylindrical body.

Generally, valves of this type are associated inside a seat defined in the body of a tap by engaging a threaded portion of the skirt of the cylindrical body of the valve with a thread of said seat and by resting the annular gasket on the bottom of said seat around the outlet of a water feed duct.

The locking of the valve in the seat of the tap axially compresses the annular gasket, and this axial action is transmitted to the ceramic disks and to the actuation rod.

An axial shoulder is provided inside the axial passage of the valve and is arranged opposite to another axial shoulder which is defined along the actuation rod so as to axially block said actuation rod, contrasting the axial force to which it is subjected.

A ring made of wearproof material is usually interposed between said two shoulders and is pressed between them when the valve is fitted to the tap.

By subjecting to compression the annular gasket and the cutoff assembly up to the axial shoulder of the actuation rod, the fitting of the valve to the tap body simultaneously provides the seal between the valve and the feed duct and between the two ceramic disks.

During fitting, the problem of applying an excessive locking force to the cylindrical body of the valve can arise, with the consequence of an excessive compression force on the cutoff assembly which can lead to the jamming of the rotation of the actuation rod or to a rapid wear or damage of the wearproof ring, making its replacement necessary.

The aim of the present invention is to obviate the above described problems by providing a valve which has high durability even if it is fitted to a tap with higher-than-optimum locking forces.

Within the scope of this aim, an object of the invention is to provide a valve in which the increase in durability can be obtained with extremely modest costs.

This aim, this object and others which will become apparent hereinafter are achieved by a ceramic disk valve for taps and fittings, comprising a body in which an axial passage is defined, said passage accommodating a cutoff assembly which comprises an actuation rod which can rotate about its own axis and cutoff elements interposed between one end of said rod and an end of said body in which the inlet of said passage is defined, said body being associable inside a tap with the inlet of said passage arranged at the outlet of a feed duct, an annular gasket being provided proximate to said inlet of said passage, said gasket protruding from said body and being intended to rest inside the tap around the outlet of said feed duct, opposite axial shoulders being provided between said cutoff assembly and the inside of said body, said shoulders contrasting the axial action exerted by said annular gasket on said cutoff assembly as a consequence of the fitting of said body to the tap, said valve being characterized in that it comprises a resting element which is interposed between said annular gasket and said cutoff assembly, said resting element being accommodated so as to be able to slide along said passage, means being furthermore provided for limiting the axial sliding of said resting element along said passage.

Further characteristics and advantages will become apparent from the detailed description of a valve according to the invention, illustrated only by way of non-limitative example in the accompanying drawings, wherein:

figure 1 is a partially axially sectional exploded lateral elevation view of the valve according to the invention;

figure 2 is an exploded perspective view of an end portion of the valve according to the invention;

figure 3 is a partially sectional enlarged view of the valve, taken from one of its longitudinal ends; and

figure 4 is an enlarged axial sectional view of the end portion of the valve shown in figure 2, illustrating a detail of the fitting of the valve inside a tap.

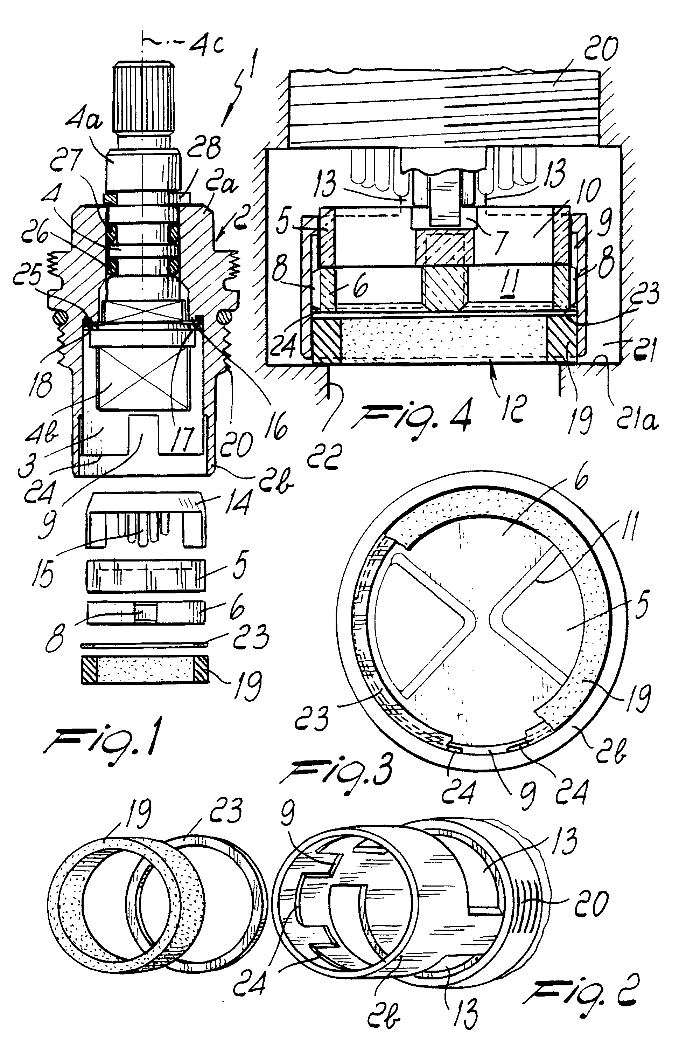

With reference to the above figures, the valve according to the invention, generally indicated by the reference numeral 1, comprises, in a known manner, a body 2 with a substantially cylindrical configuration which is traversed by an axial passage 3 inside which a cutoff assembly is accommodated; said cutoff assembly is substantially constituted by an actuation rod 4, which can rotate about its own axis 4c with respect to the body 2, and by a pair of ceramic disks, respectively 5 and 6.

One end 4a of the actuation rod 4 protrudes from a longitudinal end 2a of the body 2 and is intended to be engaged with the knob of a tap in a known manner. The other end 4b of the rod 4 is accommodated inside the body 2 and is connected to the disk 5.

The disks 5 and 6 have mutually contacting faces and are arranged coaxially to the rod 4. The disk 5, which is interposed between the disk 6 and the end 4b of the rod 4, has a notch 7 on its face directed toward the rod 4, and the appropriately flattened end 4b engages within said notch. In this manner the disk 5 is rigidly associated with the rod 4 in its rotation about the axis 4c with respect to the body 2.

The disk 6 has perimetric teeth 8 which engage within axial slots 9 which are defined on the lateral surface of the passage 3 proximate to the other longitudinal end 2b of the body 2. The coupling between the teeth 8 and the axial grooves 9 prevents the rotation of the disk 6 about the axis 4c.

The disks 5 and 6 are interposed between the end 2b of the body 2, at which the passage 3 defines an inlet port 12 for the flow of water to be controlled by means of the valve, and outlet ports 13 which transversely cross the skirt of the body 2, connecting the passage 3 to the outside.

The disks 5 and 6 are axially traversed by intermediate ports, respectively 10 and 11, which by means of the rotation of the disk 5 about the axis 4c with respect to the disk 6 can be moved into mutual alignment, so as to provide a connection between the inlet port 12 and the outlet ports 13, or can be mutually offset so as to interrupt said connection.

A plate 14 is fitted on the end 4b of the actuation rod and has, in a known manner, stream breaker fins 15 on its face directed toward the disk 5.

An axial shoulder 16 is defined along the passage 3, is directed toward the end 2b of the body 2 and is arranged opposite to an axial shoulder 17 which is correspondingly provided along the rod 4. A wearproof ring 18 is interposed between the shoulders 16 and 17 in a known manner and is fitted around the rod 4.

The disk 6 is internally spaced from the longitudinal end 2b of the body 2, and an annular gasket 19 is accommodated inside said end 2b and protrudes axially therefrom.

A threaded portion 20 is provided in a known manner on the outer skirt of the body 2 and is intended to engage a thread which is correspondingly provided on the internal surface of a seat 21 which is defined in the body of a tap and is intended to receive the valve 1. The fitting of the valve 1 to a tap causes the resting of the annular gasket 19 on the bottom 21a of the seat 21 around the outlet of a water feed duct.

According to the invention, a resting element 23 is arranged between the annular gasket 19 and the cutoff assembly and can slide axially along the passage 3. Means for limiting the axial sliding of the resting element 23 are furthermore provided in the passage 3.

The resting element 23 is conveniently constituted by a ring, for example made of synthetic material, which is interposed between the annular gasket 19 and the disk 6, i.e. the disk which is closest to the end 2b of the body 2.

The means for limiting the axial sliding of the resting element 23 are constituted by a ridge 24 which protrudes internally from the lateral surface of the passage 3 and defines an axial shoulder which is directed toward the inlet of the duct 3.

The axial shoulder defined by the ridge 24 is arranged in a plane which can substantially coincide with the face of the disk 6 which is directed toward the end 2b of the body 2 or can be spaced from said face in the opposite direction with respect to the end 2b.

If the plane of arrangement of the ridge 24 substantially coincides with the face of the disk 6, the ring 23 is provided with a reduced radial dimension so as to allow the annular gasket 19, which is made of material with high elastic deformability, to deform beyond said ring 23 and to act on the cutoff assembly when compressed, although the ring 23 is locked against the ridge 24. In this case the axial force which is discharged onto the cutoff assembly as a consequence of the fitting of the threaded valve block to the tap is reduced.

If the plane of arrangement of the ridge 24 is spaced from the face of the disk 6, the distance is preset so that it is smaller than, or at the most equal to, the axial movement of the face of the disk 6 with respect to the body 2 produced as a consequence of the elastic deformability of the materials by the maximum locking force allowed for the optimum operation of the tap. In this manner, once said optimum locking force has been exceeded, the excess force is no longer discharged onto the cutoff assembly, since the ring 23 stops against the ridge 24. In this case, the ring 23 can have such a radial dimension as to prevent any contact of the gasket 19 with the disk 6.

An element 25, for example a toroidal gasket which is elastically compressible in a direction which is parallel to the axis 4c, can conveniently be interposed between the wearproof ring 18 and the shoulder 16.

Besides ensuring an elastic response to the axial compression action, the presence of the element 25 makes machining tolerances for the production of the ridge 24 less strict.

For the sake of completeness in description, it should be mentioned that sealing gaskets 26 and 27 are interposed between the rod 4 and the body 2 and that the axial movement of the rod 4 toward the end 2b is prevented, in a known manner, by an elastic ring 28 which is fitted around the rod 4 and rests against the outer side of the end 2a of the body 2.

In practice it has been observed that the valve according to the invention fully achieves the intended aim, since the presence of the resting element and of the means for limiting its axial sliding prevent excessive locking forces from discharging completely onto the cutoff assembly.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Ceramic disk valve for taps and fittings, comprising a body (2) in which an axial passage (3) is defined, said passage (3) accommodating a cutoff assembly which comprises an actuation rod (4) which can rotate about its own axis (4c) and cutoff elements interposed between one end (4b) of said rod (4) and an end (2b) of said body (2) in which the inlet (12) of said passage (3) is defined, said body (2) being associable inside a tap with the inlet (12) of said passage (3) arranged at the outlet of a feed duct, an annular gasket (19) being provided proximate to said inlet (12) of said passage (3), said gasket (19) protruding from said body (2) and being intended to rest inside the tap around the outlet of said feed duct, opposite axial shoulders (16,17) being provided between said cutoff assembly and the inside of said body (2), said shoulders (16,17) contrasting the axial action exerted by said annular gasket (19) on said cutoff assembly as a consequence of the fitting of said body (2) to the tap, said valve being characterized in that it comprises a resting element (23) which is interposed between said annular gasket (19) and said cutoff assembly, said resting element (23) being accommodated so as to be able to slide along said passage (3), means (24) being furthermore provided for limiting the axial sliding of said resting element (23) along said passage (3).

2. valve according to claim 1, characterized in that said cutoff elements comprise a pair of disks (5,6) which have mutually contacting faces and are arranged coaxially to said actuation rod (4) between said inlet (12) of the passage (3) and outlet ports (13) which are defined transversely on the lateral surface of said body (2) and are connected to said passage (3), one of said disks (5) being rotatable about its own axis with respect to the other disk (6) by virtue of the action of said actuation rod (4), said disks (5,6) being furthermore axially traversed by intermediate ports (10,11) which can be arranged in mutual alignment or can be mutually offset by means of the relative rotation caused by said actuation rod (4), said resting element comprising a ring (23) which is interposed between said annular gasket (19) and the disk (6) which is closest to said inlet (12) of said passage (3).

3. Valve according to claims 1 and 2, characterized in that said means for limiting the axial sliding of said resting element (23) are constituted by an internal ridge (24) of said passage (3) which defines an axial shoulder directed toward said inlet (12).

4. Valve according to one or more of the preceding claims, characterized in that when the valve is not fitted to the tap said axial shoulder defined by said ridge (24) is arranged in a plane which substantially coincides, or is spaced on the side opposite to said annular gasket (19), with respect to the face directed toward said annular gasket (19) of the disk (6) which is closest to said inlet (12) of said passage (3).

5. Valve according to one or more of the preceding claims, characterized in that when the valve is not fitted to the tap the distance between said plane and said face of the disk (6) is smaller than, or at the most equal to, the axial movement of said face of the disk (6) relatively to said body (2) as a consequence of the elastic deformation of the materials induced by the maximum axial stress allowed on said cutoff assembly during the fitting of the valve to the tap.

6. Valve, according to one or more of the preceding claims, characterized in that an element (25) which is elastically compressible in a direction which is parallel to the axis (4c) of said actuation rod (4) is interposed between said opposite axial shoulders (16,17) defined between the inside of said body (2) and said cutoff assembly.

Fig. 1

Fig. 4

Fig. 3

Fig. 2

**European Patent Office**

# EUROPEAN SEARCH REPORT

| | DOCUMENTS CONSIDERED TO BE RELEVANT | | EP 91101581.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | DE - A1 - 3 828 178 (F. GROHE GMBH & CO) * Claims 13,14; fig. 1,3 * | 1,2 | F 16 K 3/08 |
| A | DE - A1 - 3 140 353 (F. GROHE GMBH & CO) * Page 6, line 29 - page 7, line 21; fig. 1,3 * | 1,2 | |
| A | EP - B1 - 0 035 056 (AMERICAN STANDARD INC.) * Belonging text; fig. 1-3, 5 * | 1,2,6 | |
| A | AU - B - 41 270/85 (IRWELL PTY. LTD) * Belonging text; fig. 1,2 * | 1,2,6 | |
| A | US - A - 4 331 176 (PARKISON) * Belonging text; fig. 1-3, 5 * | 1,2,6 | TECHNICAL FIELDS SEARCHED (Int. Cl.5) |
| A | DE - A1 - 2 841 998 (HD. EICHELBERG & CO GMBH) * Fig. 1 * ---- | 1,2,6 | F 16 K E 03 C |

The present search report has been drawn up for all claims

| Place of search | Date of completion of the search | Examiner |
|---|---|---|
| VIENNA | 03-05-1991 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)